# EUROPEAN PATENT APPLICATION

(11) **EP 2 680 211 A1**
(43) Date of publication of application: **01.01.2014**
(21) Application number: 12831902.7
(22) Date of filing: 09.04.2012
(51) Int. Cl.: G06Q 30/02, G06Q 30/06

(54) **INFORMATION PROVIDING DEVICE, INFORMATION PROVIDING METHOD, INFORMATION PROVIDING PROGRAM, AND RECORDING MEDIUM**

(30) Priority: 13.09.2011 JP 2011200039
(71) Applicant: Rakuten, Inc., Tokyo 140-0002 (JP)
(72) Inventor: MIZUMURA Mikiko, Tokyo 140-0002 (JP); NISHIDA Mitsuyoshi, Tokyo 140-0002 (JP)
(74) Representative: EIP
(86) International application number: PCT/JP2012/059650
(87) International publication number: WO 2013/038744

(57) **Abstract**

A price which is applied when a user who receives information of a product is assumed to order this product is provided. An information providing device acquires a quantity which the user is expected to order as to a product specified in response to a request from the user, acquires a price of the product for which sale is determined according to an order quantity corresponding to a sum of the acquired quantity and a quantity of the specified product ordered so far, from a combination of the price of the product and the order quantity, and outputs the acquired price.

## Description

### Technical Field

The present invention relates to a technical field of an information providing device and an information providing method which provide a price of a product whose price changes according to a past order quantity.

### Background Art

Conventionally, as a mode of business transaction of products in electronic commerce, a mode that a unit price of a product becomes cheap stepwise according to a total number of orders of products (referred to as a "total order quantity" below) accepted so far. This sale mode is known as, for example, group buying. An information providing device which provides information of a product transacted in this mode provides, for example, a price applied to a current order quantity of this product as information of the product. For example, Patent Literature 1 discloses a technique of displaying the current order quantity of a product and a price applied to the current order quantity on a user terminal. When the user browses the information of the product and then wishes to purchase this product, the user performs an operation of ordering this product. At this time, the user can specify the quantity of the product to order.

### Citation List

### Patent Literature

Patent Literature 1: Japanese Patent Application Laid-Open No. 2001-357276

### Summary of the Invention

### Problem to be solved by the Invention

When a user orders a product, the total order quantity is increased by the quantity of the ordered product. In this case, a purchase price of a product purchased by the user is a price applied to the total order quantity which is increased by the quantity of the product ordered by the user. Hence, a maximum value of a purchase price changes in some cases according to the quantity of a product ordered by the user. Hence, displaying a price applied to a total order quantity increased when a user is assumed to order a product is more preferable for the user than displaying a price applied to a total order quantity at a current point of time. When, for example, whether or not the user orders a product is decided, a price applied when the user is assumed to order a product is more suitable as information for making a decision than a price at the current point of time.

However, a conventional technique only displays a price applied to a current order quantity. Although the technique disclosed in Patent Literature 1 displays a list of ranges of product prices and order quantities to which these prices are applied, the user cannot immediately learn a price to be applied from this list when the user places an order.

In light of the above, it is an object of the present invention to provide an information providing device, an information providing method, an information providing program, and a recording medium which can provide a price applied when a user who receives information of a product is assumed to place an order of this product.

### Means for solving the Problem

In order to solve the above problem, the invention according to claim 1 is an information providing device comprising:
an order quantity acquiring means that acquires a quantity which a user is expected to order as to a product specified in response to a request from the user;
a price acquiring means that acquires a price of the product for which sale is determined according to an order quantity corresponding to a sum of the quantity acquired by the order quantity acquiring means and a quantity of the specified product ordered so far, from a memory means that stores combination information indicating a combination of the price of the product and the order quantity per product; and
an outputting means that outputs the price acquired by the price acquiring means in association with the specified product.

According to the present invention, the user can learn the price of the product matching the order quantity increased by the quantity the order of which is expected when the user orders the product.

The invention according to claim 2 is the information processing device according to claim 1,
wherein the order quantity acquiring means estimates the quantity which the user is expected to order, based on a purchase history stored in a history memory means that stores the purchase history of each order including a quantity of ordered products.

According to the present invention, the user can learn the price of the product matching the order quantity increased by the quantity the order of which is predicted based on a past history when the user orders the product.

The invention according to claim 3 is the information processing device according to claim 1,
wherein the request of the user comprises a quantity which the user wishes to order, and
the order quantity acquiring means acquires the quantity included in the request of the user as the quantity which the user is expected to order.

According to the present invention, the user can learn the price of the product matching the order quantity increased by the quantity the user wishes when the user orders the product according to the quantity the user wishes.

The invention according to claim 4 is the information providing device according to any one of claims 1 to 3,
wherein the memory means stores combination information correspondence information, for each price, which indicates the price of the product and an order quantity matching the price per product, and
the information providing device further comprises a deleting means that, when a past order quantity of the product increases, deletes, from the memory means, the combination information correspondence information which does not correspond to an order quantity in a range equal to or more than the increased order quantity among the combination information of the product stored in the memory means.

According to the present invention, information which is not necessary to output the price is deleted from the memory means, so that it is possible to reduce the amount of information stored in the memory means.

The invention according to claim 5 is the information providing device according to any one of claims 1 to 4, further comprising:
a setting information acquiring means that, from setting information stored in a setting information memory means that stores, in association with identification information for identifying a product, a plurality of pieces of setting information which is set by a seller of a product and which indicates a price of the product and a quantity order to which the price is applied, acquires the setting information matching an order quantity in a range equal to or less than order quantity corresponding to a sum of a quantity of the product identified by the identification information associated with the setting information and ordered so far, and a quantity set in advance, and
a controlling means that causes the memory means to store the combination information matching the setting information acquired by the setting information acquiring means.

According to the present invention, when the memory means which is used to output the price is provided separately from the setting information memory means which stores information set by the seller, it is possible to store in the memory means only information which is necessary at the moment to output the price among information stored in the setting information memory means. Consequently, it is possible to reduce a processing load of synchronizing the information of the memory means with the information of the setting information memory means.

The invention according to claim 6 is an information providing method executed by a computer comprising:
an order quantity acquiring step of acquiring a quantity which a user is expected to order as to a product specified in response to a request from the user;
a price acquiring step of acquiring a price of the product for which sale is determined according to an order quantity corresponding to a sum of the quantity acquired in the order quantity acquiring step and a quantity of the specified product ordered so far, from a memory means that stores combination information indicating a combination of the price of the product and the order quantity per product; and
an output step of outputting the price acquired in the price acquiring step in association with the specified product.

The invention according to claim 7 is an information providing program causing a computer to function as:
an order quantity acquiring means that acquires a quantity which a user is expected to order as to a product specified in response to a request from the user;
a price acquiring means that acquires a price of the product for which sale is determined according to an order quantity corresponding to a sum of the quantity acquired by the order quantity acquiring means and a quantity of the specified product ordered so far, from a memory means that stores combination information indicating a combination of the price of the product and the order quantity per product; and
an outputting means that outputs the price acquired by the price acquiring means in association with the specified product.

The invention according to claim 8 is a recording medium having a information providing program computer-readably recorded therein which causes a computer to function as:
an order quantity acquiring means that acquires a quantity which a user is expected to order as to a product specified in response to a request from the user;
a price acquiring means that acquires a price of the product for which sale is determined according to an order quantity corresponding to a sum of the quantity acquired by the order quantity acquiring means and a quantity of the specified product ordered so far, from a memory means that stores combination information indicating a combination of the price of the product and the order quantity per product; and
an outputting means that outputs the price acquired by the price acquiring means in association with the specified product.

### Advantageous Effects of Invention

According to the present invention, a user can learn a price of a product matching an order quantity which is increased by the order quantity whose order is expected when the user places an order of this product.

### Brief Description of Drawings

FIG. 1 is a view illustrating an example of a schematic configuration of a group buying system S according to an embodiment.
FIG. 2 is a view illustrating a display example of a top page of an electronic mall.
FIG. 3A and FIG. 3B are display examples of search result pages.
FIG. 4 is a block diagram illustrating an example of a schematic configuration of a group buying server 1 according to an embodiment.
FIG. 5A is a view illustrating an example of content registered in a member information DB 12a. FIG. 5B is a view illustrating an example of content registered in a product information DB 12b. FIG. 5C is a view illustrating an example of content registered in an order information DB 12c. FIG. 5D is a view illustrating an example of content registered in a purchase history DB 12d. FIG. 5E is a view illustrating an example of content registered in a search DB 12e.
FIG. 6A is a view illustrating an example of content registered in a price list per order quantity. FIGS. 6B to 6D are views illustrating examples of content of search records registered in the search DB 12e.
FIG. 7 is a flowchart illustrating a processing example of processing at the time of product information registration in a system control unit 14 of the group buying server 1 according to an embodiment.
FIG. 8 is a flowchart illustrating a processing example of search processing of the system control unit 14 of the group buying server 1 according to an embodiment.
FIG. 9 is a flowchart illustrating a processing example of search processing of the system control unit 14 of the group buying server 1 according to an embodiment.
FIG. 10 is a flowchart illustrating a processing example of expected order quantity estimation processing of the system control unit 14 of the group buying server 1 according to an embodiment.
FIG. 11 is a flowchart illustrating a processing example of processing at the time of order in the system control unit 14 of the group buying server 1 according to an embodiment.
FIG. 12 is a view illustrating a display example of a top page.

### Mode for carrying out the Invention

Hereinafter, embodiments of the present invention will be described in detail with reference to the drawings. In addition, the embodiments will be described where the present invention is applied to a group buying system.

### [1. First Embodiment]

### [1-1. Outline of Configuration and Function of Group Buying System]

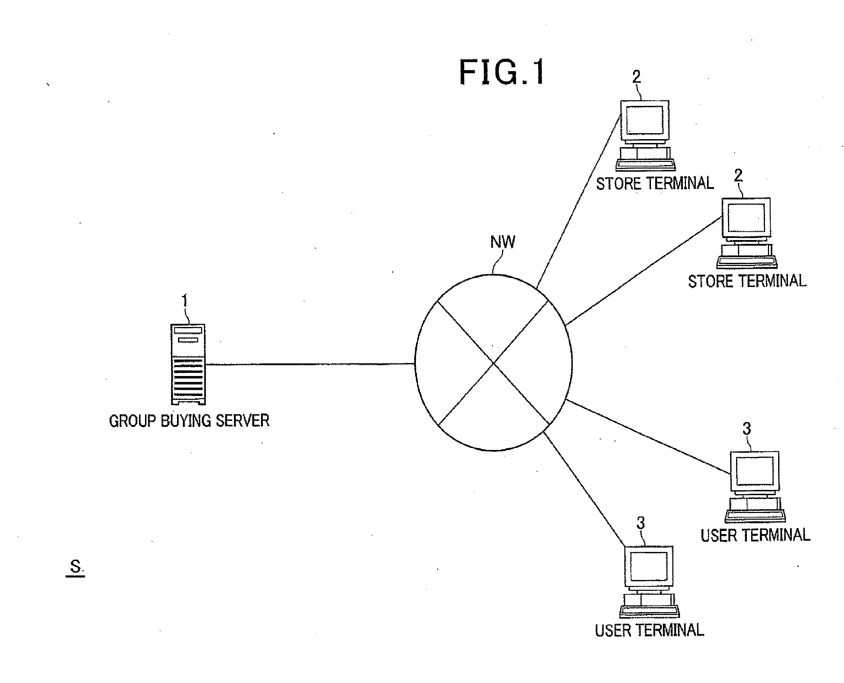

First, an outline of a configuration and a function of a group buying system S according to the present embodiment will be described using FIGS. 1 to 3. FIG. 1 is a view illustrating an example of a schematic configuration of the group buying system S according to the present embodiment.

As illustrated in FIG. 1, the group buying system S has a group buying server 1, a plurality of store terminals 2 and a plurality of user terminals 3. The group buying server 1, and each store terminal 2 and each user terminal 3 can transmit and receive data to and from each other using, for example, TCP/IP for a communication protocol through a network NW. In addition, the network NW is constructed with, for example, the Internet, dedicated communication lines (for example, CATV (Community Antenna Television) lines), a mobile communication network (including, for example, base stations) and a gate way.

The group buying server 1 (an example of an information providing device according to the present invention) is a server device which executes various types of processing related to an electronic mall at which products can be purchased by a group. The group buying is, for example, a transaction mode to which a sale period is set, and is a transaction mode that, when an order quantity of a product in this sale period is higher, a purchase price of this product becomes cheaper stepwise according to the order quantity. At the electronic mall, a plurality of stores is listed as a seller side of products. A user can purchase a desired product from a desired store by utilizing the electronic mall. According to requests from the user terminals 3, the group buying server 1, for example, transmits a web page of the electronic mall or performs processing related to, for example, search or purchase of a product.

The store terminal 2 is a terminal device which is utilized by, for example, an employee of a store which is listed in the electronic mall. The store terminal 2 is used to, for example, register information about a product to sell, in the electronic mall. The store terminal 2 accesses the group buying server 1 based on, for example, an employee's operation. By this means, the store terminal 2 receives and displays a web page from the server device. In the store terminal 2, software such as a browser and an electronic mail client is implemented. For the store terminal 2, for example, a personal computer is used.

The user terminal 3 is a terminal device of a user who utilizes the electronic mall and purchases a product. The user terminal 3 accesses the group buying server 1 based on, for example, a user's operation. By this means, the user terminal 3 receives and displays a web page from the server device. In the user terminal 3, software such as a browser and an electronic mail client is implemented. For the user terminal 3, for example, a personal computer, a mobile information terminal such as a PDA (Personal Digital Assistant) or a smart phone or a mobile telephone is used.

In the group buying system S employing this configuration, the group buying server 1 searches a product which can be purchased by a group based on a search condition specified by the user. Further, the group buying server 1 provides information of the searched product to the user terminal 3. More specifically, the group buying server 1 transmits HTML (HyperText Markup Language) document of a search result page to the user terminal 3. The search result page is a web page which displays a list of information of a searched product in association with this product as a search result of a product. Information of a product to be displayed is, for example, a price of a product. Transmitting HTML document of a search result page is an example of outputting a price of a searched product in association with this product.

A price of a product changes according to a total quantity of this product ordered so far. The total quantity of a given product ordered so far is referred to as a "total order quantity". For example, a unit price of a product is 3000 yen when the total order quantity is 1, is 2000 yen when the total order quantity is 2 or more and 10 or less, and 1000 yen when the total order quantity is 11 or more. A price applied to a range of each total order quantity is referred to as an "applied price". The applied price is a sale price in case that a final total order quantity at a point of time when acceptance of an order of a product is closed is in a range of a total order quantity matching this applied price. Further, a total order quantity which is necessary at minimum for a given applied price to be applied is referred to as a "necessary order quantity". In the above example, the necessary order quantity for prices of 3000 yen, 2000 yen and 1000 yen are 1, 2 and 11. A combination of a necessary order quantity and an applied price is set by a store which sells a product. A total order quantity at a current point of time is referred to as a "current order quantity". Further, an applied price of a current order quantity is referred to as a "current price". Furthermore, an applied price in case that the total order quantity is 1 is referred to as a "start price". Still further, an applied price of a maximum necessary order quantity among the set necessary order quantities is referred to as a "final price". A start price is the highest price among set applied prices. A final price is the lowest price among set applied prices.

A search result page includes two modes of display modes for a price of a product which can be purchased by a group. The first mode is a mode of displaying a current price. The second mode is a mode of displaying a price applied when a user who browses a search result page is assumed to order a product information of which is displayed in the search result page according to an order quantity which the user schedules. More specifically, when the user who browses a search result page is assumed to purchase a product, the total order quantity of this product is increased by the quantity ordered by this user. Hence, a price applied to the increased total order quantity is displayed. This price is referred to as an "expected price". When the user places an order, the user wants to know how much the price will be and how cheap the price is at minimum in some cases. When the current price is different from the expected price, the expected price servers as information for making a decision to decide whether or not to order a product.

The quantity ordered by the user when the user who browses a search result page is assumed to purchase a product is referred to as an "expected order quantity". An expected price (an example of a quantity which the user is expected to order according to the present invention) is a sale price of a product when an order quantity corresponding to a sum of a current order quantity and an expected order quantity is a final total order quantity and sale is determined according to this order quantity. To display the "expected price", it is necessary to acquire an expected order quantity which is the quantity of a product which the user is expected to order. In the present embodiment, the group buying server 1 estimates an expected order quantity based on a purchase history of a product purchased by the user so far. More specifically, the expected order quantity is estimated based on the order quantity specified by the user when the user ordered a product in the past. This is because a product tends to be ordered in future according to the same order quantity as the past order quantity. The expected order quantity is, for example, estimated per product genre. In addition, the maximum order quantity is set to each product. The maximum order quantity is a maximum value of the quantity of a product which can be ordered at a time. The maximum order quantity is used as a threshold of an expected order quantity for displaying an expected price. More specifically, when the expected order quantity exceeds the maximum order quantity, an applied price in case that the total order quantity is increased by the maximum order quantity is displayed as an expected price.

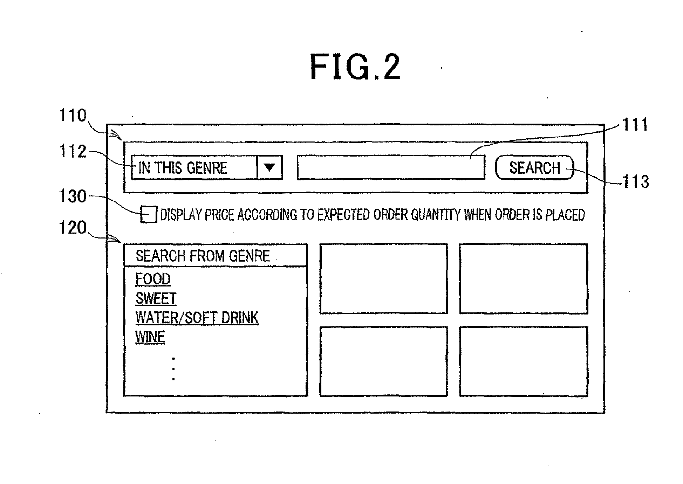

Hereinafter, a method of specifying a display mode of a price and a display example of a price will be described. FIG. 2 is a view illustrating a display example of a top page of an electronic mall. A top page is a web page positioned at an uppermost class in the electronic mall, and is a web page for specifying a search condition.

As illustrated in FIG. 2, the top page includes, for example, a search condition setting area 110, a genre specifying area 120 and an expected price display check box 130. The search condition setting area 110 includes, for example, a keyword entry field 111, a genre selection menu 112 and a search button 113. The keyword entry field 111 is an input area to which a keyword is inputted as a search condition. The genre selection menu 112 is a pull-down menu for selecting a genre for specifying a product genre as a search condition. The search button 113 is a button for making the group buying server 1 search a product according to the search condition set in the search condition setting area 110. In the genre specifying area 120, a plurality of links corresponding to each genre is displayed. Each link is a link for making the group buying server 1 search a product using a corresponding genre as a search condition. The expected price display check box 130 is a check box for selecting whether or not to display an expected price in a search result page. In addition, a condition other than a keyword or a genre may be specified as a search condition.

In a top page, when the user selects the search button 113 or selects one of links from the genre selection menu 112, the group buying server 1 searches a product. Further, a search result page which indicates this search result is displayed on a screen of the user terminal 3.

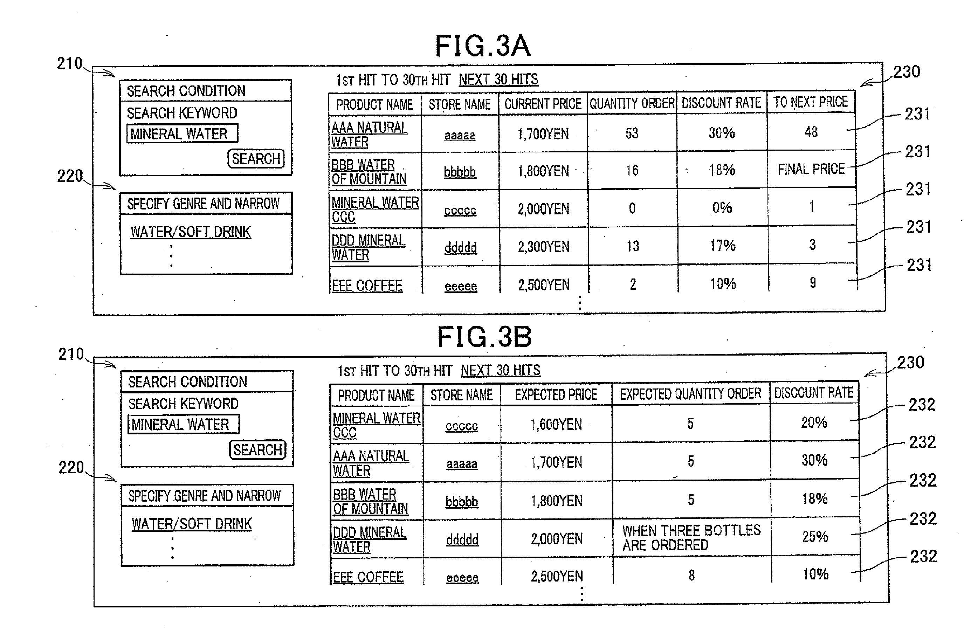

FIG. 3A and FIG. 3B are display examples of search result pages. In addition, FIG. 3A and FIG. 3B are display examples in case that a keyword of "mineral water" is specified as a search condition. Further, the same elements are assigned the same reference numerals in FIG. 3A and FIG. 3B. When the user does not perform an operation of placing a check mark in the expected price display check box 130 in the top page, a search result is displayed as illustrated in FIG. 3A.

As illustrated in FIG. 3A, a search result page includes, for example, a search condition setting area 210, a genre specifying area 220 and a search result display area 230. The search condition setting area 210 is an area for setting a new search condition such as a keyword. In the genre specifying area 220, links for setting genres as a search condition are displayed. In the genre specifying area 220, only links matching genres to which searched products belong are displayed. By operating the search condition setting area 210 or the genre specifying area 220, the user can make the group buying server 1 search a product under a new search condition.

In the search result display area 230, a list of information of searched products is displayed. More specifically, in the search result display area 230, relevant product information 231 is displayed per product. The relevant product information 231 is displayed in order of, for example, products of lower current prices. The relevant product information 231 includes product names, store names, current prices, current order quantities, discount rates and next price remaining necessary order quantities. The product name is a name of a searched product. This product name is a link to a product page. A product page is a web page which displays information about details of a product indicated a selected product name. By performing an order operation in a product page, the user can order a product information of which is listed in this product page. The store name is a name of a store which is a distribution source of a product. A current order quantity is a total order quantity at a current point of time. In addition, when the current order quantity is 0, a start price is displayed as a current price for ease of convenience. The next price remaining order quantity is a remaining order quantity which is necessary for a product price to change from a current price to a next applied price. The next applied price is a second highest price compared to a current price among a plurality of applied prices set to a product. A necessary order quantity of a next applied price is obtained by adding the next price remaining necessary order quantity to the current order quantity. The discount rate is a rate of a price obtained by discounting a start price to a current price with respect to a start price.

In the search result display area 230 illustrated in FIG. 3A, for example, the relevant product information 231 is displayed in order of products A, B, C, D and E. A current price, a current order quantity and a next price remaining necessary order quantity of the product A are 1700 yen, 53 and 48. The current order quantity and the next price remaining necessary order quantity in this case may be the number of boxes in case that beverage boxes are sold or the number of beverage bottles in case that beverage is sold loose. A current price and a current order quantity of the product B is 1800 yen and 16. In addition, 1800 yen is a final price of the product B. A current price, a current order quantity and a next price remaining necessary order quantity of the product C are 2000 yen, 0 and 1. A current price, a current order quantity and a next price remaining necessary order quantity of the product D are 2300 yen, 13 and 3. A current price, a current order quantity and a next price remaining necessary order quantity of the product E are 2500 yen, 2 and 9. In addition, the products A to D are products which belong to a genre of water/mineral water. Further, the product E is a product which belongs to soft drink. Depending on specified content of the search condition, products of a plurality of genres are searched.

When the user performs an operation of placing a check mark in the expected price display check box 130 in the top page, a search result page is displayed as illustrated in FIG. 3B.

In the search result display area 230 of the search result page illustrated in FIG. 3B, relevant product information 232 is displayed per product. The relevant product information 232 is displayed in order of, for example, products of lower expected prices. The relevant product information 232 includes product names, store names, expected prices, expected order quantities and discount rates. The discount rate is a rate of a price obtained by discounting a start price to an expected price with respect to a start price.

Meanwhile, the expected order quantity of a product which belongs to a genre of water/mineral water is estimated to be 5, and the expected order quantity of a product which belongs to soft drink is estimated to be 8. Hence, applied prices of the products A, B and C in case that the total order quantities are increased by 5 from the current order quantities are displayed as the expected prices, and the applied price of the product E in case that the total order quantity is increased by 8 from the current order quantity is displayed as an expected price. The applied price of the product D in case that the total order quantity is increased by 3 from the current order quantity is displayed as an expected price. The reason is that the maximum order quantity of the product D is 3. The expected order quantities of the products A, B and E are less than the next price remaining necessary order quantities, and therefore the expected prices do not change from the current prices. Meanwhile, the expected order quantities of the products C and D are the next price remaining necessary order quantities or more, and therefore the expected prices change from the current price. More specifically, the expected price of the product C is 1600 yen, and the expected price of the product D is 2000 yen. A s a result, the relevant product information 232 is displayed in order of the products C, A, B, D and E. Thus, it is possible to display the searched product information in order of lower expected prices. Meanwhile, the expected price of the product C changes at, for example, two stages. For example, the applied price in case that the necessary order quantity is 2 is 1800 yen, and the applied price in case that the necessary order quantity is 5 is 1600 yen. Thus, even when a price changes at a plurality of stages depending on an expected order quantity, it is possible to display this price.

In addition, a display order of the relevant product information 232 is not limited to an order of lower prices. For example, the relevant product information can also be displayed in order of higher prices, higher price discount rates, higher order quantities or closer order closing dates. Further, the user may be allowed to specify a display order in a search result page and display again a search result page obtained by rearranging the relevant product information 232 in the specified display order.

Furthermore, the expected price display check box 130 may be displayed in the search condition setting area 210. Still further, at a moment at which the user performs a selecting operation with respect to the expected price display check box 130, display of the relevant product information 231 and display of the relevant product information 232 in the search result display area 230 may be switched. That is, without a search result page newly received at the user terminal 3, display of current prices and display of expected prices may be instantaneously switched.

### [1-2. Configuration of Group Buying Server]

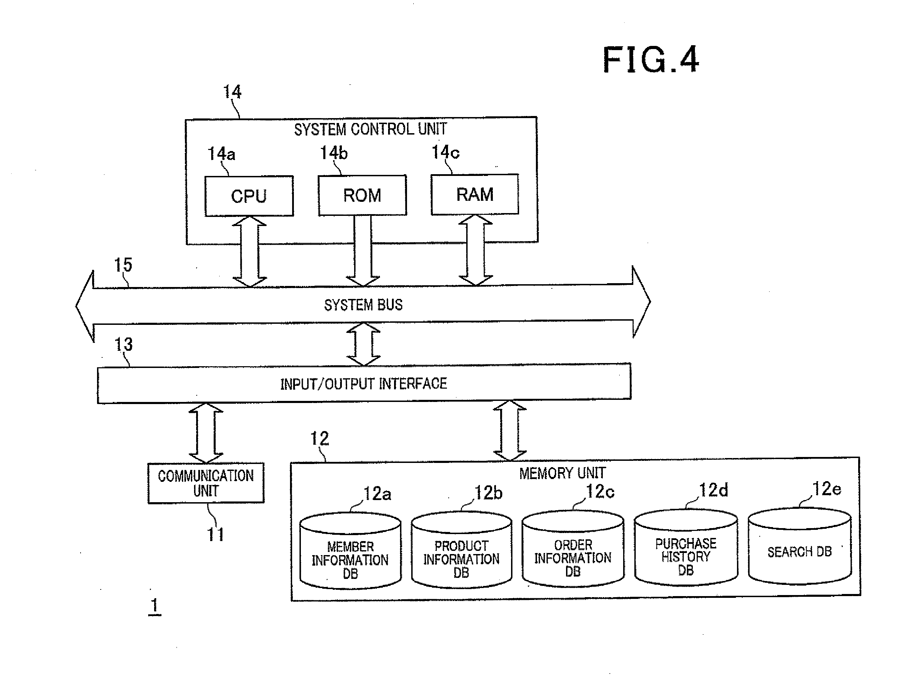

Next, a configuration of the group buying server 1 will be described using FIGS. 4 to 6.

FIG. 4 is a block diagram illustrating an example of a schematic configuration of the group buying server 1 according to the present embodiment. As illustrated in FIG. 4, the group buying server 1 has a communication unit 11, a memory unit 12, an input/output 13 and a system control unit 14. Further, the system control unit 14 and the input/output interface unit 13 are connected through a system bus 15.

The communication unit 11 connects to the network NW, and controls communication states with, for example, the user terminals 3.

The memory unit 12 is configured by, for example, a hard disk drive. In this memory unit 12, databases such as a member information DB 12a, a product information DB 12b, an order information DB 12c, a purchase history DB12d and a search result information DB 12c are constructed. Each database is constructed in, for example, different hard disk drives.

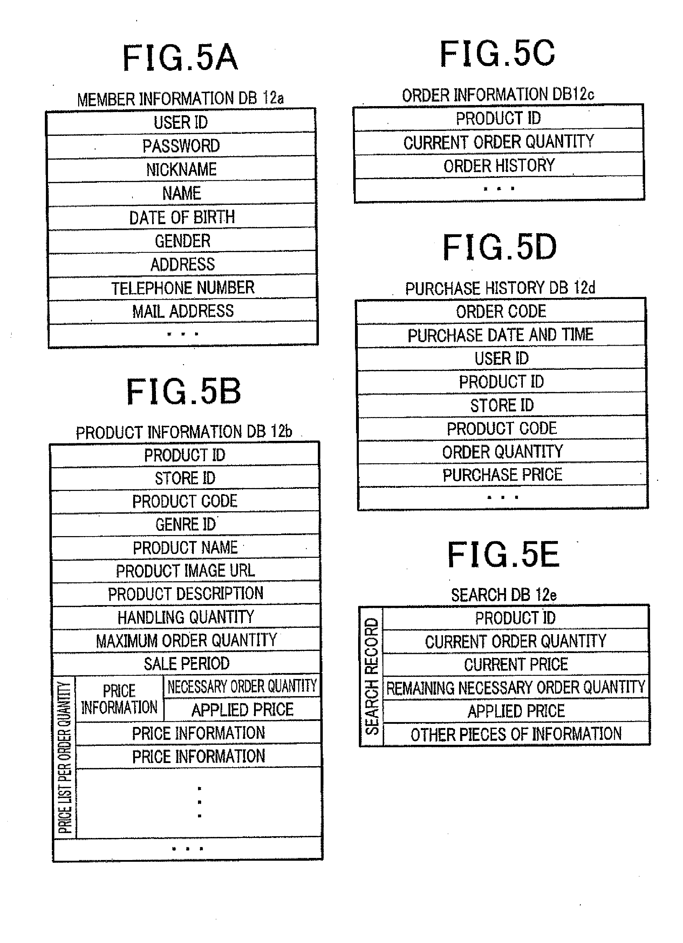

FIG. 5A is a view illustrating an example of content registered in the member information DB 12a. In the member information DB 12a, member information related to users registered as members in the group buying system S is registered. More specifically, in the member information DB 12a, user attributes such as a user ID, a password, a nickname, a name, a date of birth, the sex, a postal code, an address, a telephone number and an electronic mail address are associated and registered per user. The user ID is user identification information. In addition, member information registered in the member information DB 12a is also used for systems other than the group buying system S or service other than group buying.

FIG. 5B is a view illustrating an example of content registered in the product information DB 12b. In the product information DB 12b, product information related to products which can be purchased by a group is registered. This product information is information set by a store. More specifically, in the product information DB12b, product attributes such as a product ID, a store ID, a product code, a genre ID, a product name, a URL (Uniform Resource Locator) of a product image, product description, an order quantity specific price list, a handling quantity, a maximum order quantity, and a sale period are associated per product sold at a store, and registered. The product ID (an example of identification information according to the present invention) is product identification information for managing a product to sell. The store ID indicates a store which is a distribution source of a product. The product code is a code number for identifying a product. The product code is, for example, a JAN (Japanese Article Number Code) code. The genre ID is identification information of a genre to which a product belongs. The product name and the product description are displayed in, for example, a product page as product information, and are used for keyword search. More specifically, products including a keyword specified by the user in at least one of the product name and the product description are searched. The handling quantity is the quantity of a target product which can be sold by a store. When the total order quantity of a product reaches the handling quantity, the order is closed. The sale period indicates a product order accepting start date (sale start date), and an order closing date (sale end date). In the order quantity specific price list, a plurality of pieces of price information is registered. The price information (an example of setting information according to the present invention) includes a combination of a necessary order quantity and an applied price. When the necessary order quantity is higher, a corresponding applied price is lower. Further, basically, the necessary order quantities do not overlap between price information. Furthermore, the applied prices do not overlap between price information.

FIG. 5C is a view illustrating an example of content registered in the order information DB 12c. In the order information DB 12c, information related to acceptance of an order of a product is registered. More specifically, in the order information DB 12c, a product ID, a current order quantity, and an order history are associated per product and registered. In the order history, a history of orders of a target product from a user is registered. More specifically, an order code, an order date, a user ID and an order quantity are registered in the order history per order. The order code is identification information of an order assigned every time an order of a product is accepted. The order date is a date at which an order of a product is accepted. The user ID indicates a user who orders a product. The order quantity is the number of ordered products.

FIG. 5D is a view illustrating an example of content registered in the purchase history DB 12d. In the purchase history DB 12d, a user's purchase history of products is registered. More specifically, an order code, a purchase date, a user ID, a product ID, a store ID, a product code, an order quantity and a purchase price are associated and registered in the purchase history DB 12d. The purchase history is registered per order when an order closing date passes and purchase of a product ordered by the user is determined. The order code is assigned when an order of a purchased product is accepted. The purchase date may be, for example, an order date or an order closing date. The user ID indicates a user who purchases a product. The product ID and the product code indicate a purchased product. The store ID indicates a store of a distribution source of a purchased product. The order quantity is the number of purchased and ordered products. The order quantity in this case is a purchase quantity. The purchase price is a price obtained by multiplying with an order quantity an applied price applied to the final total order quantity of a purchased product.

FIG. 5E is a view illustrating an example of content registered in the search result information DB 12e. In the search DB 12e, search records are registered as product information which is necessary to search a product and display the relevant product information 231 and 232. In this search record (an example of combination information according to the present invention), information organized to perform search at a high speed is stored. Further, a search record is registered per set applied price of each product (per price information registered in the order quantity specific price list). More specifically, the search record includes a product ID, a current order quantity, a current price, a remaining necessary order quantity, an applied price and other pieces of information. A plurality of search records which includes the same product ID includes the same current order quantity and the current price. The remaining necessary order quantity is a remaining order quantity which is necessary for a product price to change from a current price to an applied price included in the same search record as that of this remaining necessary order quantity. Basically, a sum of the current order quantity and the remaining necessary order quantity is the necessary order quantity matching the applied price. When the current order quantity is a necessary order quantity or more matching an applied price, the remaining necessary order quantity is 0. The other pieces of information includes, for example, a store ID, a store name, a genre ID, a product code, a product name and a URL of a product image.

The reason why a search record is registered per applied price is to display an applied price matching an expected order quantity is displayed as an expected price in a search result page. However, when search records of all applied prices of products are registered in the search DB 12e, a data amount of the search DB 12e becomes enormous. Further, when multiple search records are registered, a search speed decreases in some cases. Then, the system control unit 14 registers only search records which are necessary to perform search and display prices, in the search DB 12e.

First, when product information including an order quantity specific price list of a given product is registered in the product information DB 12b, the system control unit 14 registers only price information the necessary quantities of which are the maximum order quantity or less among price information registered in the order quantity specific price list. This is because an expected price only needs to be displayed in a range equal to or less than an order quantity corresponding to a sum of the current order quantity (0 in the beginning) and the maximum order quantity. The reason why an applied price corresponding to the current order quantity and the maximum order quantity is displayed as an expected price of a product when an expected order quantity exceeds a maximum order quantity of this product is to display an expected price based only on information registered in the search DB 12e at this point of time. By registering only search records which are necessary for the moment to display an expected price, it is possible to reduce a processing load of synchronizing content of the search DB 12e with content of the order quantity specific price list than a processing load of registering search records of all pieces of price information registered in the order quantity specific price list.

Subsequently, when an order is accepted from the user and the current order quantity increases, the system control unit 14 newly registers a search record according to the current order quantity. More specifically, the system control unit 14 registers a search record of price information the necessary order quantity of which newly becomes the sum of the current order quantity and the maximum order quantity or less due to the increase of the current order quantity. Meanwhile, the system control unit 14 deletes from the search DB 12e a search record the applied price of which becomes higher than a current price due to the increase of the current order quantity. The expected price is an applied price matching one of order quantities in a range equal to or more than the increased current order quantity. Hence, a search record an applied price of which becomes higher than a current price does not match an order quantity in the range equal to or more than the current order quantity. This is because an applied price higher than a current price is not displayed as an expected price.

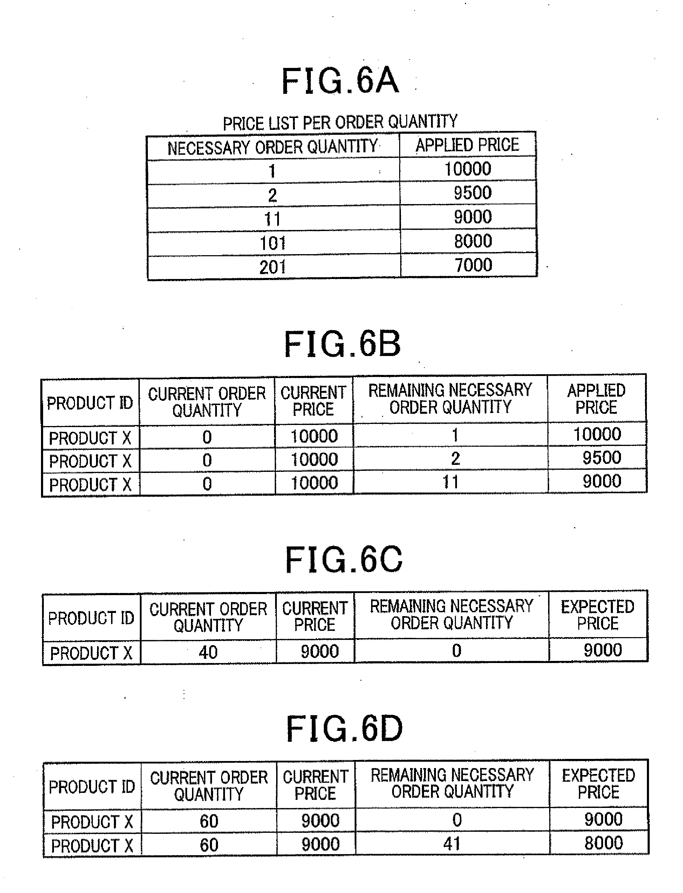

A specific example will be described below. FIG. 6A is a view illustrating an example of content registered in the price list per order quantity. Further, FIGS. 6B to 6D are views illustrating examples of content of search records of a product X registered in the search DB 12e, and content of these search records. In addition, other pieces of information included in the search record are not illustrated in FIGS. 6B to 6D.

The price list per order quantity of the given product X is set as illustrated in, for example, FIG. 6A. More specifically, five pieces of price information are registered in the order quantity specific price list. In each price information, combinations of necessary order quantities and applied prices are 1 and 10000 yen, 2 and 9500 yen, 11 and 9000 yen, 101 and 8000 yen and 201 and 7000 yen. Further, the maximum order quantity of the product X is 50.

When product information is originally registered, 3 search records of the product X are registered in the search DB 12e as illustrated in FIG. 6B. More specifically, the search records the necessary order quantities of which are 1, 2 and 11 equal to or less than the maximum order quantity are registered. In this case, the current order quantity and the current price of each search record are 0 and 10000 yen. Further, the remaining necessary order quantity and the applied price of each search record are a necessary order quantity and an applied price of corresponding price information.

Subsequently, the 40 products X are ordered. Then, the current order quantity is 40, and then the current price is 9000 yen. Hence, as illustrated in FIG. 6C, the search record the applied price of which is 10000 yen and the search record the applied price of which is 9500 yen are deleted from the search DB 12e. The current order quantity and the current price of the search record which is not deleted are updated. Subsequently, the 20 products X are further ordered. Then, the current order quantity becomes 60. In this case, the sum of the current order quantity and the maximum order quantity is 110. Hence, as illustrated in FIG. 6D, a search record the necessary order quantity of which is 101 is newly registered in the search DB 12e. Further, the current order quantity of the search record is updated. Thus, search records are registered and deleted.

In addition, the system control unit 14 may also delete from the search DB 12e a search record the remaining necessary order quantity of which becomes 0. An applied price included in this search record is the same as a current price. When an applied price included in this search record is displayed as an expected price, the expected price does not change from a current price. Hence, in this case, a current price included in another search record only needs to be displayed as the expected price. Meanwhile, in this case, the system control unit 14 does not delete a search record an applied price of which is a final price. When this search record is deleted, all search records of a target product are deleted, and then this product cannot be searched.

Next, the other pieces of information stored in the memory unit 12 will be described. In the memory unit 12, various items of data such as HTML document, XML (Extensible Markup Language) document, image data, text data and electronic document for displaying web pages are stored. Further, in the memory unit 12, various setting values set by, for example, an administrator are stored.

Furthermore, in the memory unit 12, various programs such as an operating system, a WWW (World Wide Web) server program, a DBMS (Database Management System) and an electronic commerce managing program are stored. An electronic commerce managing program is a program for executing processing related to an electronic mall such as registration of product information, search of products, generation of web pages such as search result pages, order of products, and registration and deletion of search records in and from the search DB 12e. In addition, the various programs may be, for example, acquired from another server device through the network NW or may be recorded in a recording medium such as a DVD (Digital Versatile Disc) and read through a drive device.

The input/output interface 13 performs interface processing between the communication unit 11 and the memory unit 12, and the system control unit 14.

The system control unit 14 is formed with, for example, a CPU 14a, a ROM (Read Only Memory) 14b and a RAM (Random Access Memory) 14c. Further, when the CPU 14a reads and executes various programs, the system control unit 14 functions as an order quantity acquiring means, a price acquiring means, an outputting means, a deleting means, a setting information acquiring means and a controlling means according to the present invention.

In addition, the group buying server 1 may be configured by a plurality of server devices. For example, a server device which registers product information, a server device which searches for products, a server device which performs processing such as an order of products, a server device which sends web pages in response to requests from the user terminals 3 and a server device which manages a database may be connected to each other through, for example, a LAN.

### [1-3. Operation of Group Buying System]

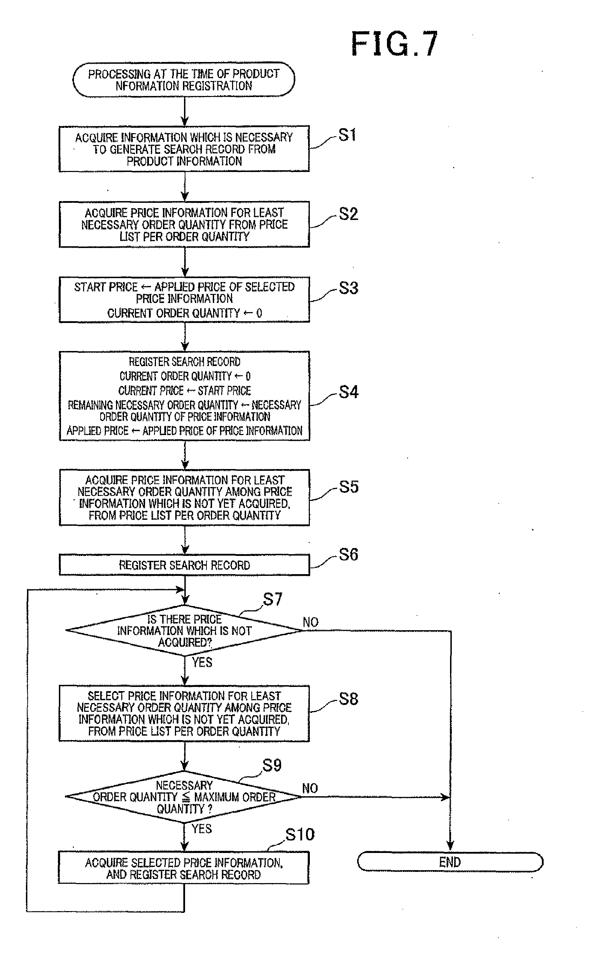

Next, an operation of the group buying system S will be described using FIGS. 7 to 11.

FIG. 7 is a flowchart illustrating a processing example of processing at the time of product information registration in the system control unit 14 of the group buying server 1 according to the present embodiment.

In the processing at the time of product information registration, search records of products product information of which are registered are registered in the search DB 12e. For example, an employee of a store operates the store terminal 2 to register product information of a product to newly sell. Then, the store terminal 2 displays a web page for setting product information by accessing the group buying server 1. The employee sets product information including a combination of a necessary order quantity and an applied price to a web page. Then, the store terminal 2 registers the set product information in the group buying server 1. The group buying server 1 registers the received product information in the product information DB 12b. The processing upon product information registration is started when product information is registered in the product information DB 12b.

First, the system control unit 14 acquires information which is necessary to generate a search record from the registered product information (step S1). The information acquired in this case is, for example, a product ID, a store ID, a genre ID, a product code, a product name and product description. Further, the system control unit 14 acquires a store name associated with a store ID. Furthermore, the system control unit 14 acquires the maximum order quantity from the registered product information. Next, the system control unit 14 acquires price information a necessary order quantity of which is the least from the order quantity specific price list of the registered product information (step S2). Next, the system control unit 14 sets an applied price included in the acquired price information, to the start price. Further, the system control unit 14 registers 0 as the current order quantity of a product information of which is registered, in the order information DB 12c in association with a product ID of this product (step S3).

Next, the system control unit 14 registers the search record matching the acquired price information (step S4). More specifically, the system control unit 14 generates search records. In this case, the system control unit 14 sets the product ID acquired from the product information as a product ID of a search record. Further, the system control unit 14 sets 0 as the current order quantity of the search record. Furthermore, the system control unit 14 sets the necessary order quantity included in the acquired price information as the remaining necessary order quantity of the search record. Still further, the system control unit 14 sets the price information included in the acquired price information as the applied price of the search record. Moreover, the system control unit 14 sets the other pieces of information acquired in step S1. The system control unit 14 registers the search record generated in this way, in the search DB 12e.

Next, the system control unit 14 acquires price information a necessary order quantity of which is the least among price information which is not yet acquired, from the order quantity specific price list of the registered product information (step S5). Further, the system control unit 14 registers the search record matching the acquired price information (step S6). Processing content in this case is the same as that in step S4. The applied price included in the search record acquired in step S5 is the next applied price of the current price of at a point of a sale start time. To display a next price remaining necessary order quantity in the search result display area 230 of a search result page, a remaining necessary order quantity included in the search record acquired in step S5 is required. Hence, two search records are registered at minimum.

Next, the system control unit 14 determines whether or not there is price information which is not yet acquired, in the order quantity specific price list of the registered product information (step S7). In this case, when determining that all pieces of price information are acquired (step S7: NO), the system control unit 14 finishes the processing at the time of product information registration.

Meanwhile, when determining that there is price information which is not yet acquired (step S7: YES), the system control unit 14 selects price information the necessary order quantity of which is the least among price information which is not yet acquired (step S8). Next, the system control unit 14 determines whether or not the necessary order quantity included in the selected price information is the maximum order quantity or less (step S9). In this case, when the necessary order quantity is the maximum order quantity or less, the system control unit 14 acquires the selected price information from the order quantity specific price list, and registers a search record matching this price information (step S10). Processing content in this case is the same as that in step S4. When finishing this processing, the system control unit 14 proceeds to step S7. Meanwhile, when determining that the necessary order quantity is the maximum order quantity or less (step S9: NO), the system control unit 14 finishes the processing at the time of product information registration. Thus, the system control unit 14 registers as a necessary number of search records as possible in the search DB 12e.

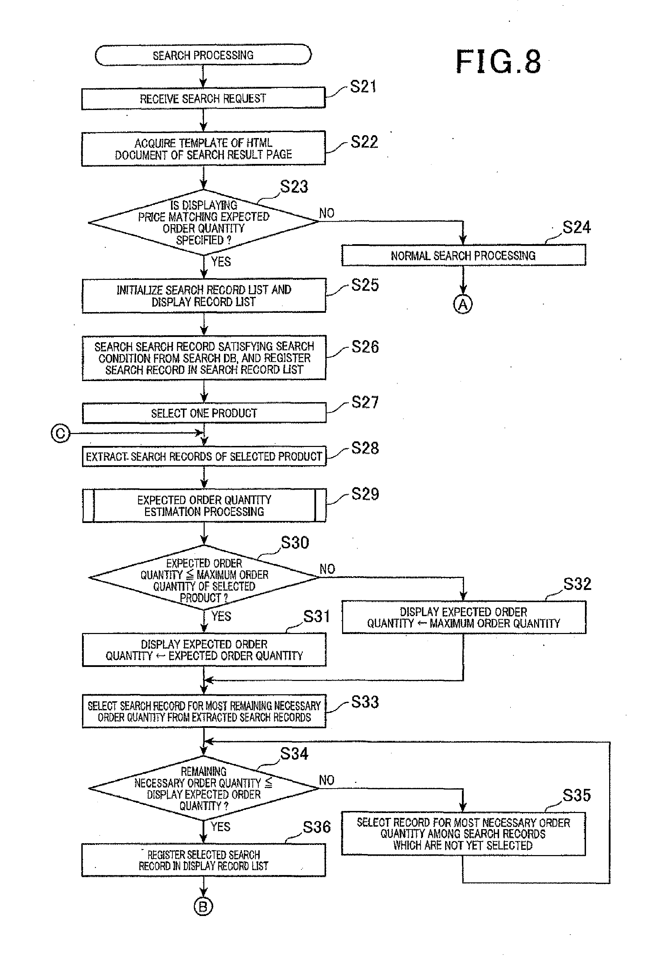

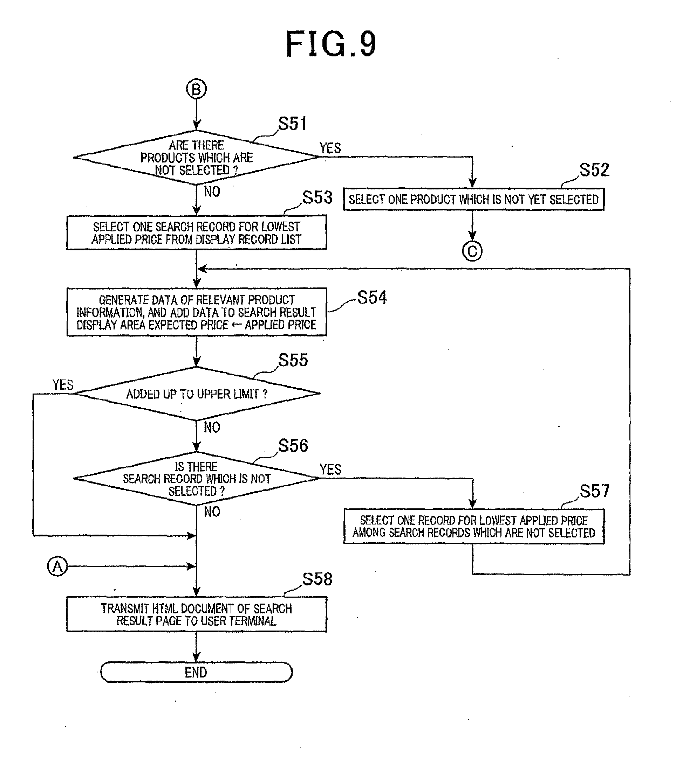

FIGS. 8 and 9 are flowcharts illustrating processing examples of search processing of the system control unit 14 of the group buying server 1 according to the present embodiment. According to search processing, a product is searched in response to a request from the user terminal 3, and HTML document of the search result page is sent to the user terminal 3.

When the user specifies a search condition in the top page of the electronic mall, the user terminal 3 sends a search request to the group buying server 1. A search request (an example of a user's request according to the present invention) is a message which indicates a user's request for product search. Further, the search request includes information indicating the search condition. More specifically, when the user specifies a keyword, the specified keyword is set. Further, when the user specifies a genre, a genre ID of the specified genre is set. Furthermore, the search request includes an expected price display flag which indicates whether or not to display an expected price in a search result page. More specifically, when a check mark is not placed in the expected price display check box 130, the expected price display flag is set to OFF. Meanwhile, when a check mark is placed in the expected price display check box 130, the expected price display flag is set to ON.

As illustrated in FIG. 8, when receiving the search request from the user terminal 3 (step S21), the system control unit 14 acquires a template of the HTML document of the search result page from the memory unit 12 (step S22).

Next, the system control unit 14 determines whether or not the user commands to display an expected price in the search result page (step S23). More specifically, when the expected price display flag is set to OFF, the system control unit 14 determines that the user does not command to display an expected price, and, when the expected price display flag is set to ON, determines that the user commands to display an expected price. In this case, when determining that the user does not command to display the expected price (step S23: NO), the system control unit 14 performs normal search processing (step S24).

First, the system control unit 14 searches a search record of a product satisfying the search condition, from the search DB 12e. More specifically, when a keyword is set to the search request, the system control unit 14 searches a search record including this keyword in at least one of the product name and the product description. Further, when the genre ID is set to the search request, the system control unit 14 searches a search record of the product which belongs to the specified genre, based on the genre ID included in the search record. When a plurality of pieces of information indicating the search condition is set to the search request, the system control unit 14 searches, for example, search records which satisfy a plurality of search conditions. In addition, the genre may not adopt a hierarchical structure. In this case, each product may be linked to a genre of a lowermost layer to which this product belongs, or may be linked to part or all of parent/child genres which track from the lowermost layer to the uppermost layer.

Next, the system control unit 14 generates data for displaying the relevant product information 231 per product based on the searched search record. In this case, the system control unit 14 generates data such that the current price included in the search record is displayed. Further, the system control unit 14 additionally sets the generated data to an area corresponding to the search result display area 230 in the template of the HTML document of the search page. Meanwhile, the system control unit 14 sets data in order of lower current prices included in search records. By this means, the relevant product information 231 is displayed in order of lower current prices. When finishing this processing, the system control unit 14 moves to step S58.

In step S23, when determining that the user commands to display the expected price (step S23: YES), the system control unit 14 initializes a search record list and a display record (step S25). The search record list is a list in which search records of searched products are registered. The display record is a list in which a search record used to display the relevant product information 232 among the search records of the searched products is registered.

Next, the system control unit 14 searches a search record of a product satisfying a search condition from the search DB 12e (step S26). The searching method in this case is the same as that in step S24. Further, the system control unit 14 registers search records of a product satisfying the search condition, in the search record list.

Next, the system control unit 14 selects one of the searched products (step S27). More specifically, the system control unit 14 acquires a product ID included in one search record of the search records registered in the search record list as a product ID of a selected product. Next, the system control unit 14 extracts all search records including the product ID of the selected product from the search record list (step S28). In this case, the system control unit 14 deletes the extracted search records from the search record list. Next, the system control unit 14 as the order quantity acquiring means executes expected order quantity estimation processing (step S29).

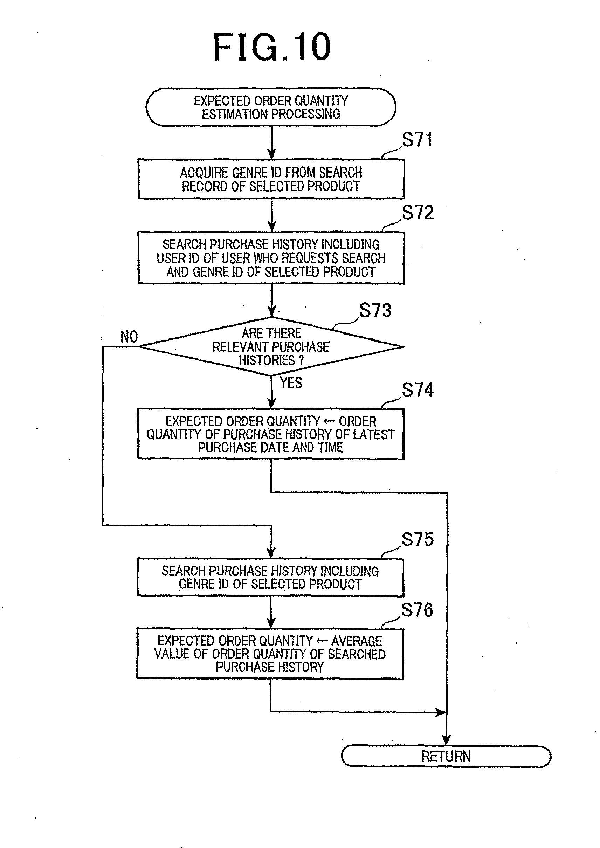

FIG. 10 is a flowchart illustrating a processing example of expected order quantity estimation processing of the system control unit 14 of the group buying server 1 according to the present embodiment. First, the system control unit 14 acquires a genre ID from a search record of an extracted selected product (step S71). Next, the system control unit 14 searches a purchase history including a user ID of the user who uses the user terminal 3 which sends a search request, and a genre ID acquired from the search record from the purchase history DB 12d (step S72). That is, the system control unit 14 searches the purchase history recorded when the user who requests search purchased a product of the same genre as that of the selected product. When the user is logging in the electronic mall, the system control unit 14 can acquire the user ID of the user who requests search. For example, upon log-in of the user, the system control unit 14 receives the user ID from the user terminal 3, and stores the received user ID in the user terminal 3 as a Cookie. Hence, when the user is logging in, the Cookie including the user ID is added to the search request. Hence, the system control unit 14 acquires a user ID from the Cookie added to a search query.

Next, the system control unit 14 determines whether or not relevant purchase histories are searched (step S73). In this case, when determining that the relevant purchase histories are searched (step S73: YES), the system control unit 14 selects a purchase history of the latest purchase history among the search histories. Further, the system control unit 14 sets an order quantity included in the selected purchase history as the ordered order quantity. That is, the system control unit 14 sets as an expected order quantity the latest order quantity of a product of the same genre as that of the selected product. In addition, the system control unit 14 may calculate an average value of order quantities included in the searched purchase histories, and set this average value as the expected order quantity. Further, the system control unit 14 may search a purchase history including a product code of the selected product instead of the genre ID of the selected product. That is, the system control unit 14 may estimate the expected order quantity based on the purchase history of the same product as the selected product selected by the user who requests search. When finishing this processing, the system control unit 14 finishes expected order quantity processing.

Meanwhile, when determining that a relevant purchase history is not searched (step S73: NO), the system control unit 14 searches a purchase history including the genre ID acquired from the search record, from the purchase history DB 12d (step S75). That is, the system control unit 14 searches purchase histories of all users when a product of the same genre as that of the selected product is purchased irrespectively of users who purchased the product are. In addition, the system control unit 14 calculates an average value of order quantities included in the searched purchase histories, and sets this average value as the expected order quantity (step S76). In this case, the system control unit 14 may select the purchase history of the latest purchase date per user, and calculate an average value using only the order quantity included in the selected purchase history. Further, the system control unit 14 may estimate the expected order quantity based on the purchase history of the same product as the selected product instead of the purchase history of the product of the same genre as that of the selected product. When finishing this processing, the system control unit 14 finishes expected order quantity processing.

In addition, the system control unit 14 may execute only steps S71 to S74 in the expected order quantity estimation processing or may execute only steps S71, S75 and S76. Further, when the system control unit 14 cannot search a relevant purchase history, for example, a current price of this selected product instead of an expected price may be displayed in the search result display area 230.

When finishing the expected order quantity estimation processing, the system control unit 14 determines whether or not the estimated expected order quantity is the maximum order quantity of the selected product or less as illustrated in FIG. 8 (step S30). In this case, when determining that the expected order quantity is the maximum order quantity or less (step S30: YES), the system control unit 14 sets the expected order quantity as a display expected order quantity (step S31). The display expected order quantity is an expected order quantity which is actually displayed in the relevant product information 232, and is an expected order quantity used to specify an expected price. Meanwhile, when determining that the expected order quantity is not the maximum order quantity or less (step S30: NO), the system control unit 14 sets the maximum order quantity as a display expected order quantity (step S32).

When finishing step S30 or S31, the system control unit 14 selects a search record the stored remaining order quantity of which is the highest among the search records of the selected product extracted in step S28 (step S33). Next, the system control unit 14 determines whether or not the remaining necessary order quantity included in the selected search record is the display expected order quantity or less (step S34). In this case, when determining that the remaining necessary order quantity is not the display expected order quantity or less (step S34: NO), the system control unit 14 selects the search record the stored remaining necessary order quantity of which is the highest among search records which are not yet selected among the search records of the selected product (step S35). Next, the system control unit 14 proceeds to step S34. Meanwhile, when the remaining necessary order quantity is the display expected order quantity is less (step S34: YES), the system control unit 14 registers the selected search record in the display record list (step S36). That is, the system control unit 14 registers a search record including an applied price applied to the display expected order quantity. Thus, the system control unit 14 as the price acquiring means acquires from the search DB 12e the applied price matching the order quantity corresponding to the sum of the current order quantity and the display expected order quantity. This applied price is displayed as an expected price.

Next, as illustrated in FIG. 9, the system control unit 14 determines whether or not there is a product which is not yet selected among searched products (step S51). More specifically, the system control unit 14 determines whether or not search records are still registered in the search record list. The system control unit 14 determines that there are products which are not yet selected when search records are still registered, and determines that all products are selected when a search record is not registered. In this case, when determining that there are products which are not yet selected (step S51: YES), the system control unit 14 selects one of products which are not yet selected (step S52). More specifically, the system control unit 14 acquires a product ID included in one search record of the search records registered in the search record list as a product ID of a selected product. Next, the system control unit 14 proceeds to step S28. By repeating processing in steps S28 to S52, the system control unit 14 registers a search record of each searched product which is necessary to display an expected price, in the display record list. In addition, although the system control unit 14 executes the expected order quantity estimation processing per searched product, the system control unit may execute the expected order quantity estimation processing per genre to which a searched product belongs. By so doing, when a product belonging to the same genre is searched a plurality of times, it is possible to reduce the number of times of execution of expected order quantity estimation processing.

In step S51, when determining that all products are selected (step S51: NO), the system control unit 14 selects one search record the stored applied price of which is the lowest among the search records registered in the display record list (step S53). Next, the system control unit 14 adds data for displaying the relevant product information 232 to a template of HTML document of a search page based on the selected search record (step S54). More specifically, the system control unit 14 generates data including a product name included in the search record, a store name, an applied price and a display expected order quantity. In this case, the system control unit 14 sets the applied price as the expected price. Further, the system control unit 14 additionally sets the generated data to an area corresponding to the search result display area 230 in the template of the HTML document of the search page.

Next, the system control unit 14 determines whether or not the data of the relevant product information 232 is added up to an upper limit of the relevant product information 232 which can be displayed per page (step S55). In this case, when determining that the data is not added up to the upper limit (step S55: NO), the system control unit 14 determines that there are search records which are not yet selected among the search records registered in the display record list (step S56). In this case, when determining that there are search records which are not yet selected (step S56: YES), the system control unit 14 selects one search record the stored applied price of which is the lowest among the search records which are not yet selected (step S57). Next, the system control unit 14 proceeds to step S54. By repeating processing in steps S54 to S57, the system control unit 14 sets HTML document such that the relevant product information 232 of each searched product is displayed in order of lower expected prices.

When finishing processing in step S24, and when determining in step S55 that the data is added up to the upper limit (step S55: YES) or determining in step S56 that all search records are selected (step S56: NO), the system control unit 14 as the outputting means sends the HTML document of a search result page finished by setting each data, to the user terminal 3 which is the transmission source of the search request (step S58). When finishing this processing, the system control unit 14 finishes search processing.

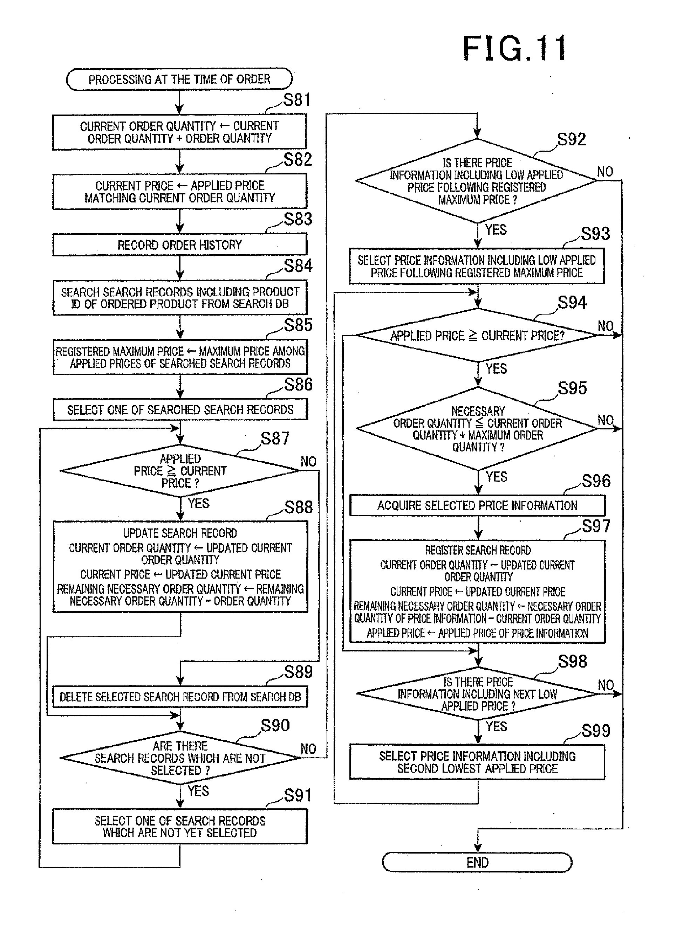

FIG. 11 is a flowchart illustrating a processing example of processing upon order in the system control unit 14 of the group buying server 1 according to the present embodiment.

In a product page of the electronic mall, the user inputs as the order quantity the quantity of products which the user wants to purchase, and selects a button for placing an order. Then, the user terminal 3 sends an order request which indicates an order request of a product, to the group buying server 1. The order request includes a product ID of an order target product (referred to as an "order product" below), and an inputted order quantity. The processing upon order is started when the group buying server 1 receives the order request.

First, the system control unit 14 updates the current order quantity of the order product (step S81). More specifically, the system control unit 14 searches a current order quantity matching the product ID of the order product among current order quantities registered in the order information DB 12c. Further, the system control unit 14 adds the order quantity included in the search request to the searched current order quantity.

Next, the system control unit 14 acquires the current price of the order product (step S82). More specifically, the system control unit 14 acquires as the current price an applied price matching the updated current order quantity from the order quantity specific price list registered in the product information DB 12b in association with the product ID of the order product. The applied price matching the current order quantity is an applied price included in price information including a necessary order quantity closest to the current order quantity among price information including the necessary order quantity equal to or less than the current order quantity.

Next, the system control unit 14 records the order history (step S83). More specifically, the system control unit 14 registers an order code, an order date, a user ID of a user who places an order and an order quantity included in an order request, in the order information DB 12c in association with a product ID of an order product.

Next, the system control unit 14 searches a search record including the product ID of the order product from the search DB 12e (step S84). Next, the system control unit 14 selects a search record the stored applied price of which is the highest among the searched search records. Further, the system control unit 14 sets the applied price included in the selected search record as a registered maximum price (step S85).

Next, the system control unit 14 selects one of the searched search records (step S86). Next, the system control unit 14 determines whether or not the applied price included in the selected search record is the current price or more (step S87). In this case, when determining that the applied price is the current price or more (step S87: YES), the system control unit 14 updates the selected search record (step S88). More specifically, the system control unit 14 sets the updated current order quantity as the current order quantity of the search record. Further, the system control unit 14 sets a current price matching the updated current order quantity as the current price of the search record. Furthermore, the system control unit 14 subtracts the order quantity included in the search request, from the remaining necessary order quantity of the search record. Meanwhile, when determining that the applied price is not the current price or more (step S87: NO), the system control unit 14 deletes the selected search record from the search DB 12e (step S89).

When finishing processing in step S88 or S89, the system control unit 14 determines whether or not there are search records which are not yet selected among the searched records (step S90). In this case, when determining that there are search records which are not yet selected (step S90: YES), the system control unit 14 selects one of search records which are not yet selected (step S91). Next, the system control unit 14 proceeds to step S87. By repeating processing in steps S87 to S91, the system control unit 14 as the deleting means deletes from the search DB 12e search records which do not match the order quantities in the range equal to or more than the increased current order quantity.

Further, when determining that all search records are selected (step S90: NO), the system control unit 14 determines whether or not there is price information including the second lowest applied price compared to the registered maximum price in the order quantity specific price list of the order product (step S92). The second lowest applied price compared to the registered maximum price is a price closest to the registered maximum price among applied prices higher than the registered maximum price among a plurality of applied prices registered in the order quantity specific price list. In this case, when determining that there is not price information including the second lowest applied price (step S92: NO), the system control unit 14 finishes processing upon order. This is a case where a search record including a final price of an order product has already been registered in the search DB 12e.

When determining that there is price information including the second lowest applied price (step S92: YES), the system control unit 14 selects price information including the second lowest applied price compared to the registered maximum price (step S93). Next, the system control unit 14 determines whether or not the applied price included in the selected price information is the updated current price or more (step S94). In this case, when determining that the applied price is the current price or more (step S94: YES), the system control unit 14 determines a necessary order quantity included in the selected price information is the sum of the current order quantity and the maximum order quantity of the order product or less (step S95). In this case, when determining that the necessary order quantity is the sum of the current order quantity and the maximum order quantity or less (step S95: YES), the system control unit 14 as the setting information acquiring means acquires the selected price information from the product information DB 12b (step S96). Next, the system control unit 14 as the controlling means registers the search record matching the acquired price information (step S97). More specifically, the system control unit 14 generates search records. In this case, the system control unit 14 sets the product ID of the order product as a product ID of a search record. Further, the system control unit 14 sets the updated current order quantity as the current order quantity of the search record. Furthermore, the system control unit 14 sets a current price matching the updated current order quantity as the current price of the search record. Still further, the system control unit 14 sets a difference between the necessary order quantity included in the acquired price information and the updated current order quantity as the remaining necessary order quantity of the search record. Moreover, the system control unit 14 sets the price information included in the acquired price information as the applied price of the search record. Moreover, the system control unit 14 sets the other pieces of information. The system control unit 14 registers the search record generated in this way, in the search DB 12e.

When determining in step S94 that the applied price is not the current price or more (step S94: NO) or when finishing processing in step S97, the system control unit 14 determines whether or not there is price information including the second lowest applied price compared to the applied price included in the selected price information, in the order quantity specific price list of the order product (step S98). In this case, when determining that there is the price information including the second lowest applied price (step S98: YES), the system control unit 14 selects price information including the second lowest applied price compared to the applied price included in the selected price information (step S99). Next, the system control unit 14 proceeds to step S94. By repeating processing in step S94 to S99, the system control unit 14 acquires price information including an applied price matching the order quantity in a range equal to or less than the order quantity corresponding to the sum of the updated current order quantity and the maximum order quantity, from the order quantity specific price list of the order product registered in the product information DB 12b, and registers the search record matching the acquired price information in the search DB 12e.

Further, when determining in step S95 that the necessary order quantity is not the sum of the current order quantity and the maximum order quantity or less (step S95: NO), or when determining in step S98 that there is not the price information including the second lowest applied price (step S98: NO), the system control unit 14 finishes processing upon order.

As described above, according to the present embodiment, the system control unit 14 of the group buying server 1 acquires an expected order quantity of a product searched based on a search request, acquires from search records registered in the search DB 12e an applied price applied when sale is determined according to an order quantity corresponding to the sum of the expected order quantity and the current order quantity of the searched product, and sends HTML document of a search result page which displays the acquired applied price as an expected price. Consequently, the user can learn a price matching the total order quantity which is increased by the quantity which is expected to be ordered when the user orders the product.

Further, the system control unit 14 estimates the expected order quantity based on the purchase history registered in the purchase history DB 12d. Consequently, the user can learn a price matching the total order quantity which is increased by the quantity which is expected to be ordered when the user orders the product.

Further, when the current order quantity is changed by an order of a product, the system control unit 14 deletes a search record which does not match the order quantity in the range equal to or more than the updated current order quantity among search records of an order product registered in the search DB 12e. Consequently, it is possible to reduce the data amount of the search DB 12e.

Further, the system control unit 14 acquires price information matching the order quantity in the range equal to or less than the order quantity corresponding to the sum of the current order quantity and the maximum order quantity of the product matching the product ID matching the order quantity specific price list among price information registered in the order quantity specific price list registered in the product information DB 12b, and registers the search record matching the acquired price information in the search DB 12e. Consequently, it is possible to reduce a processing load of synchronizing content of the search DB 12e with content of the order quantity specific price list. Further, it is possible to delete the data amount of the search DB 12e.

In addition, although the flowchart in FIG. 11 illustrates an example where search records applied prices of which are less than current prices are deleted from the search DB 12e one by one, records applied prices of which are current prices or more may be collectively added after search records are collectively deleted.

### [2. Second Embodiment]

In the first embodiment, a group buying server 1 estimates an expected order quantity based on a purchase history. By contrast with this, in the second embodiment described below, a user specifies an order quantity which the user wishes when the user is assumed to order a product, and the group buying server 1 acquires the specified order quantity from the user terminal 3 as the expected order quantity. Hereinafter, differences from the first embodiment will be mainly described.

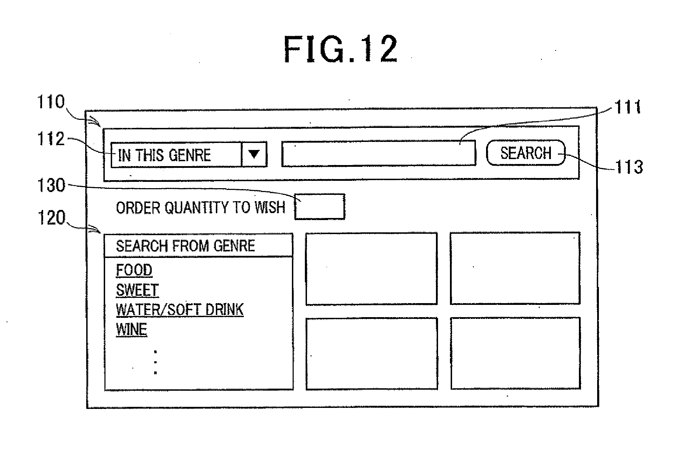

FIG. 12 is a view illustrating a display example of a top page according to the present embodiment. In FIG. 12, the same elements as those in FIG. 2 will be assigned the same reference numerals. As illustrated in FIG. 12, the top page includes, for example, a search condition setting area 110, a genre specifying area 120 and an order quantity entry field 140. The order quantity entry field 140 is an input area for inputting a desired order quantity. When the user does not input the order quantity in the order quantity entry field 140 and specifies only a search condition, a search result page as illustrated in FIG. 3A is displayed as a search result page. Meanwhile, when the user inputs the order quantity in the order quantity entry field 140 and specifies a search condition, a search result page as illustrated in FIG. 3B is displayed as a search result page. In this case, irrespectively of a genre of a searched product, an applied price corresponding to the sum of the current order quantity of this product and the order quantity inputted by the user is displayed as the expected price. Meanwhile, as to a product the order quantity of which is inputted by the user and exceeds the maximum order quantity, an applied price corresponding to the sum of the current order quantity and the maximum order quantity is displayed as an expected price.

When the user inputs the order quantity, the inputted order quantity is set as the expected order quantity to the search request sent from the user terminal 3. In step S23 of search processing illustrated in FIG. 8, a system control unit 14 determines whether or not the expected order quantity is set to the search request instead of determining displaying an expected price in a search result page is commanded by the user. In this case, when determining that the expected order quantity is not set, the system control unit 14 proceeds to step S24, and performs processing of displaying a current price of the searched product. Meanwhile, when determining that the expected order quantity is set, the system control unit 14 proceeds to step S26, and performs processing of displaying an expected price of the searched product. Without executing expected order quantity estimation processing in step S29, the system control unit 14 makes determination using the expected order quantity set to the search request in step S30.

As described above, according to the present embodiment, the user can learn a price matching the total order quantity which is increased by the quantity which the user wishes when the user orders the product according to the quantity which the user wishes.

In addition, in step S9 of processing at the time of product information registration illustrated in FIG. 7 and in step S95 in processing upon order illustrated in FIG. 11, the system control unit 14 uses a maximum order quantity of a product as a threshold for determining whether or not it is necessary to register a search record in the search DB 12e. However, information other than the maximum order quantity may be used as this threshold. Further, information other than the maximum order quantity may be used as a threshold to be compared with the expected order quantity in step S30 of search processing illustrated in FIG. 8. For example, the system control unit 14 may use a threshold set by a store per product. Further, the threshold may be set based on a purchase history. More specifically, the system control unit 14 searches a purchase history of a product the genre of which is the same or a product the product code of which is the same as that of the product for which the threshold is determined, from the purchase history DB 12d. Further, the system control unit 14 determines the threshold based on the order quantity included in the searched purchase history. In this case, the system control unit 14 determines the threshold such that the order quantity upon order of a given rate in the past orders is the threshold or less. More specifically, an order quantity matching an N percentile among order quantities of each searched purchase history is a threshold. That is, the threshold is determined such that the rate of order the order quantity of which is the threshold or less is N% and the rate of order the order quantity of which is higher than the threshold is 100-N%. N is a value set in advance. For example, N only needs to be set in a range exceeding 50 such that large part of the order quantity is the threshold or less.

Further, in each of the above embodiments, a current order quantity and a current price can be set to a search record. However, when a current order quantity and a current price do not need to be displayed in a search result page (when the current order quantity and the current price do not need to be displayed in the search result page illustrated in FIG. 3A), the current order quantity and the current price may not be set.

Further, in each of the above embodiments, a remaining necessary order quantity is set to a search record. However, as long as information enables determination as to whether or not an applied price included in the same search record is an expected price, another information may be set to a search record instead of a remaining necessary order quantity. For example, a range of the remaining order quantity matching the applied price may be set to a search record. In an example in FIG. 6C, 0 to 60 is set as a range of the remaining order quantity to a search record an applied price of which is 9000 yen. Further, in an example in FIG. 6D, 0 to 40 is set as a range of the remaining order quantity to a search record an applied price of which is 9000 yen, and 41 or more is set to a search record an applied price of which is 8000 yen. Furthermore, for example, a necessary order quantity may be set to a search record. In this case, it is possible to determine whether or not an applied price included in this search record is an expected price, based on a current order quantity, an expected order quantity and a necessary order quantity included in the search record. The current order quantity in this case may be set to the search record and acquired from the search record, or may be acquired from a product information DB 12b. Further, a range of an order quantity matching an applied price may be set to a search record. For example, in an example of FIG. 6B, 1 to 1 is set as a range of an order quantity to a search record an applied price of which is 10000 yen, 2 to 10 is set as a range of an order quantity to a search record an applied price of which is 9500 yen, and 11 to 100 is set as a range of an order quantity to a search record an applied price of which is 9000 yen. The range of the order quantity does not change even when the current order quantity increases.

Further, instead of a necessary order quantity, the range of the order quantity matching an applied price may be set to price information of a price list per order quantity.

Furthermore, although the present invention is applied to display a price in case that a searched product is displayed as a search result of a product based on a search condition specified by the user in the above embodiment, a mode to which the present invention is applicable is not limited to display of a search result. For example, the present invention may be applied to display a price in case that information of a product is displayed in a product page.

### Reference Signs List

- 1: Group buying server
- 2: Store terminal
- 3: User terminal
- 11: Communication unit
- 12: Memory unit
- 12a: Member information DB
- 12b: Product information DB
- 12c: Order information DB
- 12d: Purchase history DB
- 12e: Search DB
- 13: Input/output interface
- 14: System control unit
- 14a: CPU
- 14b: ROM
- 14c: RAM
- 15: System bus
- NW: Network
- S: Group buying system

## Claims

1. An information providing device comprising:
an order quantity acquiring means that acquires a quantity which a user is expected to order as to a product specified in response to a request from the user;
a price acquiring means that acquires a price of the product for which sale is determined according to an order quantity corresponding to a sum of the quantity acquired by the order quantity acquiring means and a quantity of the specified product ordered so far, from a memory means that stores combination information indicating a combination of the price of the product and the order quantity per product; and
an outputting means that outputs the price acquired by the price acquiring means in association with the specified product.

2. The information processing device according to claim 1,
wherein the order quantity acquiring means estimates the quantity which the user is expected to order, based on a purchase history stored in a history memory means that stores the purchase history of each order including a quantity of ordered products.

3. The information processing device according to claim 1,
wherein the request of the user comprises a quantity which the user wishes to order, and
the order quantity acquiring means acquires the quantity included in the request of the user as the quantity which the user is expected to order.

4. The information providing device according to any one of claims 1 to 3,
wherein the memory means stores combination information correspondence information, for each price, which indicates the price of the product and an order quantity matching the price per product, and
the information providing device further comprises a deleting means that, when a past order quantity of the product increases, deletes, from the memory means, the combination information correspondence information which does not correspond to an order quantity in a range equal to or more than the increased order quantity among the combination information of the product stored in the memory means.

5. The information providing device according to any one of claims 1 to 4, further comprising:
a setting information acquiring means that, from setting information stored in a setting information memory means that stores, in association with identification information for identifying a product, a plurality of pieces of setting information which is set by a seller of a product and which indicates a price of the product and a quantity order to which the price is applied, acquires the setting information matching an order quantity in a range equal to or less than order quantity corresponding to a sum of a quantity of the product identified by the identification information associated with the setting information and ordered so far, and a quantity set in advance, and
a controlling means that causes the memory means to store the combination information matching the setting information acquired by the setting information acquiring means.

6. An information providing method executed by a computer comprising:
an order quantity acquiring step of acquiring a quantity which a user is expected to order as to a product specified in response to a request from the user;
a price acquiring step of acquiring a price of the product for which sale is determined according to an order quantity corresponding to a sum of the quantity acquired in the order quantity acquiring step and a quantity of the specified product ordered so far, from a memory means that stores combination information indicating a combination of the price of the product and the order quantity per product; and
an output step of outputting the price acquired in the price acquiring step in association with the specified product.

7. An information providing program causing a computer to function as:
an order quantity acquiring means that acquires a quantity which a user is expected to order as to a product specified in response to a request from the user;
a price acquiring means that acquires a price of the product for which sale is determined according to an order quantity corresponding to a sum of the quantity acquired by the order quantity acquiring means and a quantity of the specified product ordered so far, from a memory means that stores combination information indicating a combination of the price of the product and the order quantity per product; and
an outputting means that outputs the price acquired by the price acquiring means in association with the specified product.

8. A recording medium having a information providing program computer-readably recorded therein which causes a computer to function as:
an order quantity acquiring means that acquires a quantity which a user is expected to order as to a product specified in response to a request from the user;
a price acquiring means that acquires a price of the product for which sale is determined according to an order quantity corresponding to a sum of the quantity acquired by the order quantity acquiring means and a quantity of the specified product ordered so far, from a memory means that stores combination information indicating a combination of the price of the product and the order quantity per product; and
an outputting means that outputs the price acquired by the price acquiring means in association with the specified product.
